# EUROPEAN PATENT APPLICATION

(11) **EP 2 733 324 A1**
(43) Date of publication of application: **21.05.2014**
(21) Application number: 12810587.1
(22) Date of filing: 11.07.2012
(51) Int. Cl.: F02B 37/00, F02B 37/10

(54) **SILENCER FOR SUPERCHARGER, AND SUPERCHARGER AND HYBRID SUPERCHARGER EACH COMPRISING SAME**

(30) Priority: 12.07.2011 JP 2011154146
(71) Applicant: Mitsubishi Heavy Industries, Ltd., Tokyo 108-8215 (JP)
(72) Inventor: ONO, Yoshihisa, Tokyo 108-8215 (JP); SHIRAISHI, Keiichi, Tokyo 108-8215 (JP); TAGAWA, Masayoshi, Tokyo 108-8215 (JP)
(74) Representative: HOFFMANN EITLE
(86) International application number: PCT/JP2012/067679
(87) International publication number: WO 2013/008840

(57) **Abstract**

An object is to provide a turbocharger silencer that contains at least one of a motor and a generator and that allows for improved maintainability, and a turbocharger and a hybrid turbocharger provided with the same. A turbocharger silencer includes a silencer body (7) disposed around at least one of a motor and a generator having a rotating shaft, and a silencer casing (8) that accommodates the silencer body (7) therein. The silencer casing (8) is splittable in a direction orthogonal to an axial direction of the rotating shaft.

## Description

### {Technical Field}

The present invention relates to turbocharger silencers and to turbochargers and hybrid turbochargers provided with the same. In particular, the present invention relates to the structure of a turbocharger silencer used in a marine turbocharger.

### {Background Art}

Generally, a turbocharger silencer (referred to as "silencer" hereinafter) provided in a turbocharger driven by exhaust gas introduced from a marine internal combustion engine has an integral structure and is removable in the axial direction of the turbocharger (for example, see Patent Literature 1).

Although the silencer disclosed in Patent Literature 1 is shown in a split state, the turbocharger has an integral structure in actuality.

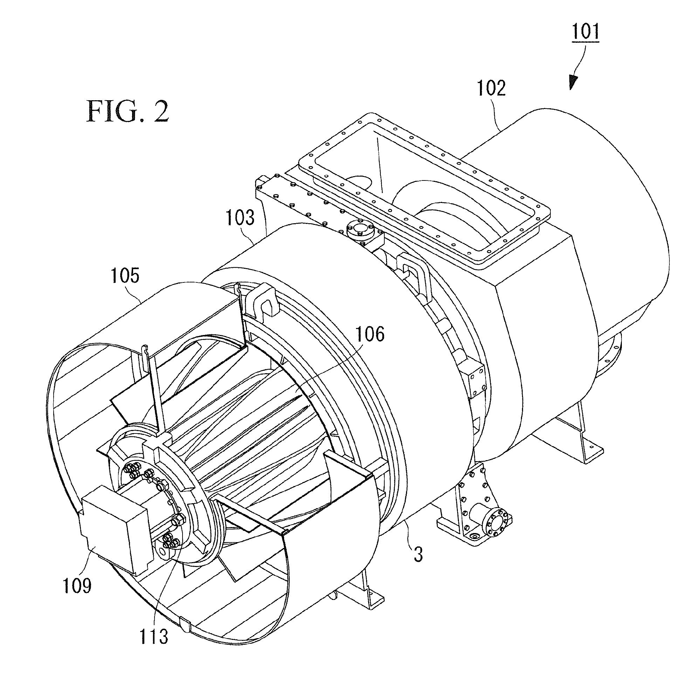

Patent Literature 2 discloses a hybrid turbocharger serving as a turbocharger that contains a motor-generator within a silencer. As shown in Fig. 2, this hybrid turbocharger includes a turbine 102 that is driven by exhaust gas, a compressor 103 that is driven by the turbine 102 so as to pressure-feed outside air, a turbocharger rotating shaft (not shown) that connects the turbine 102 and the compressor 103, a silencer 105 provided at the opposite side of the compressor 103 from the turbine 102, and a motor-generator (not shown) having a motor-generator shaft (not shown) coupled to the turbocharger rotating shaft via a flexible coupling (not shown).

The motor-generator is accommodated within a motor-generator housing 106, and the motor-generator housing 106 is provided within the silencer 105, which is formed as a single unit. The silencer 105 is provided with a pipe arrangement section 113 to which pipes (not shown) for supplying a lubricant, a coolant, and cooling air to the motor-generator are connected. The pipe arrangement section 113 is provided substantially at the center of an end surface, facing away from the compressor 103, of the silencer 105 in the axial direction of the hybrid turbocharger 101.

The motor-generator has a motor-generator shaft that extends in the axial direction of the hybrid turbocharger 101 substantially through the center of the motor-generator. One end of the motor-generator shaft extends substantially through the center of the end surfaces of the silencer 105. The motor-generator shaft extending through the end surfaces of the silencer 105 protrudes from the end surface of the silencer 105 that faces away from the compressor 103. The protruding end of the motor-generator shaft is provided with a junction box 109. The junction box 109 is connected to an output power cable (not shown), and an end surface of the junction box 109 is connected to a lubricant pipe, a cooling-air pipe, and a coolant pipe.

### {Citation List}

### {Patent Literature}

{PTL 1}
   Japanese Unexamined Patent Application, Publication No. 2001-295623
{PTL 2}
   Japanese Unexamined Patent Application, Publication No. 2007-56790

### {Summary of Invention}

### {Technical Problem}

However, in the hybrid turbocharger 101 according to Patent Literature 2 shown in Fig. 2, the silencer 105 is formed as a single unit, and the junction box 109 is provided at the end surface of the silencer 105 that faces away from the compressor 103. Therefore, when performing maintenance on the motor-generator or the flexible coupling, the output power cable connected to the junction box 109 and the lubricant pipe, the coolant pipe, and the cooling-air pipe connected to the pipe arrangement section 113 need to be removed before the silencer 105 can be pulled out from the hybrid turbocharger 101 in the axial direction thereof (i.e., leftward in the drawing).

Therefore, the output power cable and the various pipes need to be removed before the silencer 105 can be pulled out, which is a problem in that the maintenance process requires a large number of personnel and a long period of time.

The present invention has been made to solve the aforementioned problem, and an object thereof is to provide a turbocharger silencer that contains at least one of a motor and a generator and that allows for improved maintainability, and a turbocharger and a hybrid turbocharger provided with the same.

### {Solution to Problem}

In order to achieve the aforementioned object, the present invention provides the following solutions.

A turbocharger silencer according to a first aspect of the invention includes a silencer body disposed around at least one of a motor and a generator having a rotating shaft, and a silencer casing that accommodates the silencer body therein. The silencer casing is splittable in a direction orthogonal to an axial direction of the rotating shaft.

Generally, in the turbocharger silencer containing at least one of the motor and the generator, the rotating shaft of at least one of the motor and the generator extends through the silencer casing of the turbocharger silencer, and an end of the rotating shaft is provided with a junction box to which an output power cable is connected. Furthermore, a surface of the silencer casing provided with the junction box is connected to pipes for supplying a lubricant and a coolant to at least one of the motor and the generator.

When such a turbocharger silencer is to be disassembled, the output power cable connected to the junction box and the pipes need to be removed in order to pull out the silencer casing in the axial direction of the rotating shaft. This removing process requires workforce and labor time, which is a problem in terms of low maintainability.

In view of this, the silencer casing is made splittable in the direction orthogonal to the axial direction of the rotating shaft of at least one of the motor and the generator. Thus, the turbocharger silencer can be disassembled by removing the silencer casing without having to remove the pipes and the output power cable. This facilitates maintenance of the turbocharger silencer, so that the number of personnel and the labor time required for maintenance can be reduced.

In the first aspect, it is preferable that each of splitting surfaces of the split silencer casings be provided with a flange and that the flange of one of the silencer casings be L-shaped in cross section.

The splitting surfaces of the silencer casings are each provided with a flange, and the flange of one of the split silencer casings is L-shaped. With the L-shaped flange, a path of sound leaking between the splitting surfaces of the silencer casings is bent into an L-shape, so that leakage of the sound can be suppressed. Therefore, the sound leaking between the splitting surfaces can be reduced as compared with a case where the flange of one of the silencer casings is flat instead of being L-shaped.

Furthermore, with the L-shaped flange of one of the split silencer casings, the splitting surfaces can be readily positioned when the silencer casings are joined to each other. This allows for improved ease of assembly of the turbocharger silencer.

In the first aspect, splitting surfaces of the split silencer casings preferably have a vibration damper interposed therebetween.

The vibration damper is interposed between the splitting surfaces of the silencer casings. Consequently, sound leaking between the splitting surfaces of the silencer casings can be further reduced.

In the first aspect, the silencer casing preferably has an intake port that is provided in a sidewall, as viewed in a direction orthogonal to an axial direction of the silencer casing, and that takes in outside air; end surfaces provided at opposite ends of the silencer casing in the axial direction thereof; and a plurality of silencer ribs that are provided around an outer periphery of at least one of the motor and the generator and that connect the end surfaces. Moreover, the flanges preferably extend outward in the axial direction from the end surfaces.

The silencer casing is constituted of the intake port that is provided in the sidewall, as viewed in the direction orthogonal to the axial direction of the silencer casing, and that takes in outside air; the end surfaces provided at opposite ends of the silencer casing in the axial direction thereof; and the plurality of silencer ribs that are provided around the outer periphery of at least one of the motor and the generator and that connect the end surfaces. The flanges extend outward in the axial direction of the silencer casing from the end surfaces. Accordingly, with the flanges extending outward from the end surfaces of the silencer casing, outside air can be taken in through the intake port without blocking the flow of outside air taken into the silencer casing.

In the first aspect, it is preferable that the number of silencer ribs provided allow for increased rigidity of the split silencer casings.

By providing the plurality of silencer ribs, the rigidity of the split silencer casings is increased. Thus, the rigidity of the split silencer casings can be maintained substantially at the same level as that of a non-splittable silencer casing.

In the first aspect, at least one of the motor and the generator preferably includes a housing that surrounds an outer periphery thereof and a plurality of housing ribs extending toward the sidewall of the silencer casing from the housing. Moreover, it is preferable that the silencer ribs each have a shape such that the silencer ribs do not come into contact with the housing ribs.

The silencer ribs each have a shape such that the silencer ribs do not come into contact with the housing ribs extending outward from the housing provided around the outer periphery of at least one of the motor and the generator. Thus, the silencer ribs and the housing ribs do not interfere with each other. Consequently, the silencer casing can be split and disassembled.

In the first aspect, the silencer body is preferably formed of a plurality of substantially plate-like sound absorbing members, the sound absorbing members are preferably arranged at substantially equal pitch circumferentially around the rotating shaft, and the sound absorbing members are preferably arranged such that the silencer body is split along any of outside-air flow paths formed between the sound absorbing members.

The sound absorbing members are arranged such that, when the silencer body having the plurality of substantially plate-like sound absorbing members arranged at substantially equal pitch circumferentially around the rotating shaft of at least one of the motor and the generator is to be split, the silencer body is split along any of the outside-air flow paths formed between the sound absorbing members. Consequently, each sound absorbing member itself is prevented from being split, thus preventing a reduction in the sound absorbing effect.

A turbocharger according to a second aspect of the invention includes the aforementioned turbocharger silencer.

The turbocharger silencer used allows for easier maintenance. Thus, maintenance of at least one of the motor and the generator contained within the turbocharger silencer is facilitated. This allows for improved maintainability of the turbocharger.

A hybrid turbocharger according to a third aspect of the invention includes a motor-generator that is coupled to a rotating shaft of a turbine and a compressor; a motor-generator housing attached around the motor-generator; a plurality of motor-generator-housing ribs extending radially from the motor-generator housing, each motor-generator-housing rib increasing in size toward an air intake port of the compressor so as to support the motor-generator and the motor-generator housing; a plurality of silencer elements that are arranged around the motor-generator-housing ribs and that block sound flowing outside from the air intake port of the compressor; a silencer casing provided around the silencer elements so as to cover the silencer elements; panels that constitute a part of the silencer casing, the panels extending parallel to a plane orthogonal to the rotating shaft and sandwiching the silencer elements; and silencer ribs that connect the panels and extend radially relative to the rotating shaft. The silencer casing is split into an upper silencer casing and a lower silencer casing along a horizontal line. The motor-generator-housing ribs and the silencer ribs have adjusted shapes such that the motor-generator-housing ribs and the silencer ribs do not interfere with each other when the upper silencer casing is lifted in a vertical direction.

### {Advantageous Effects of Invention}

Accordingly, in the turbocharger silencer according to the present invention and the turbocharger and the hybrid turbocharger provided with the same, the silencer casing is splittable in the direction orthogonal to the axial direction of the rotating shaft of at least one of the motor and the generator. Thus, the turbocharger silencer can be disassembled by removing the silencer casing without having to remove the pipes and the output power cable. This facilitates maintenance of the turbocharger silencer, so that the number of personnel and the labor time required for maintenance can be reduced.

### {Brief Description of Drawings}

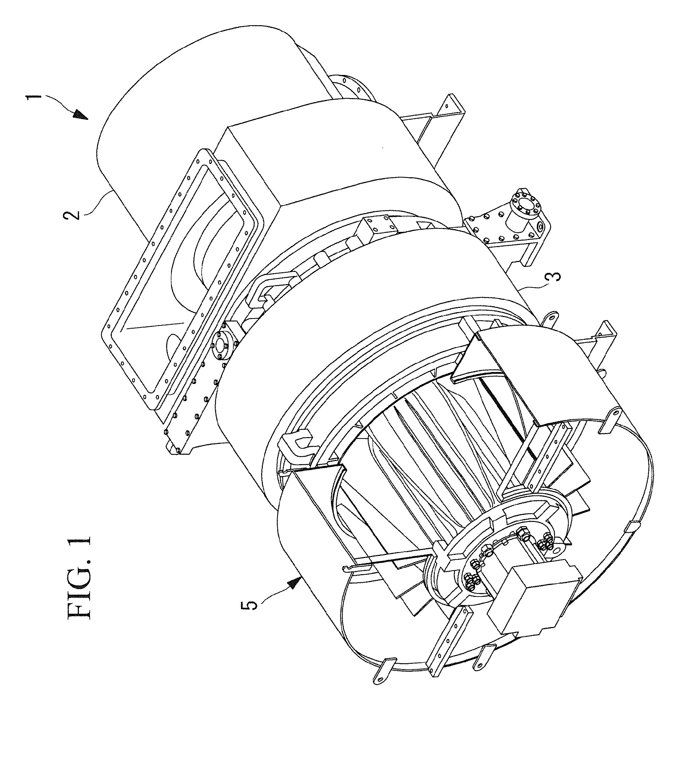

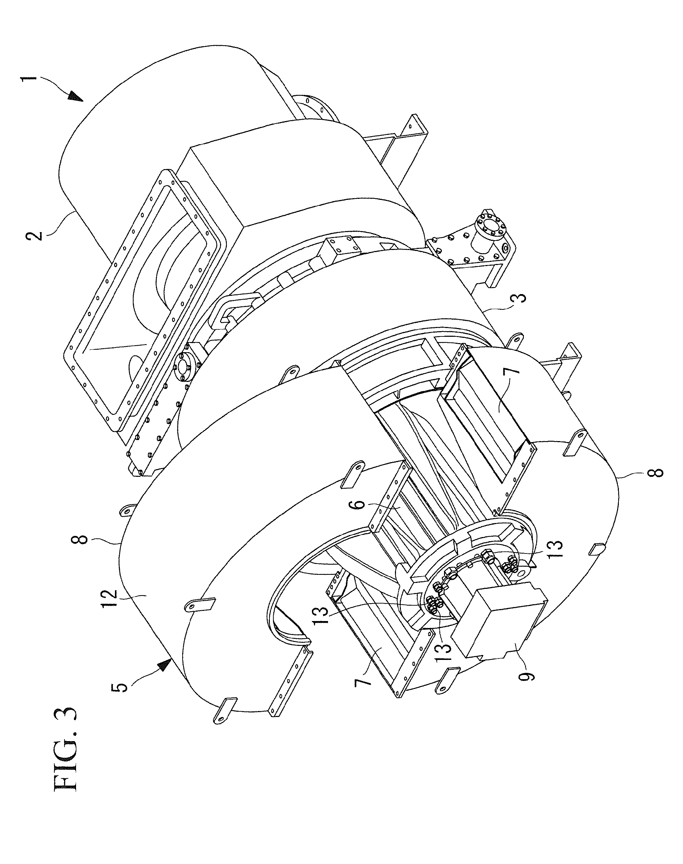

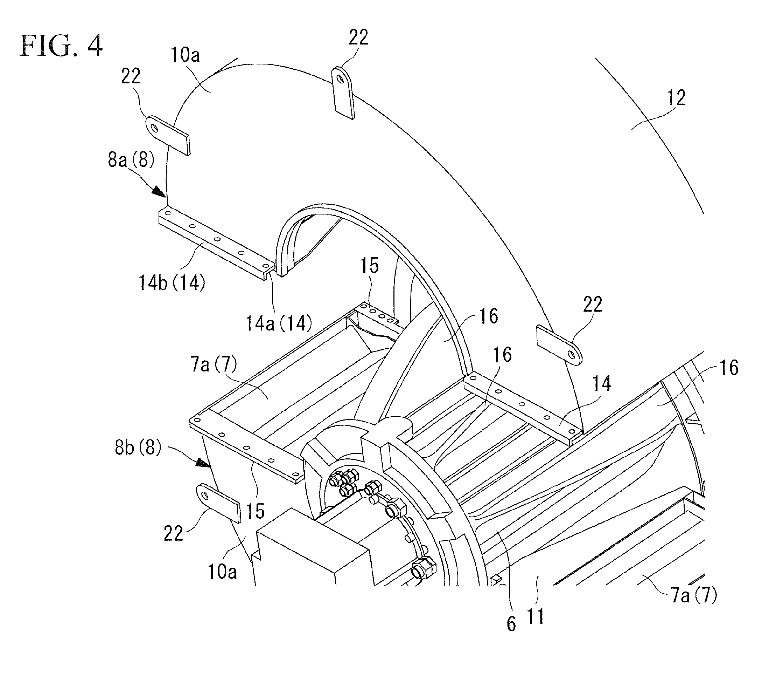

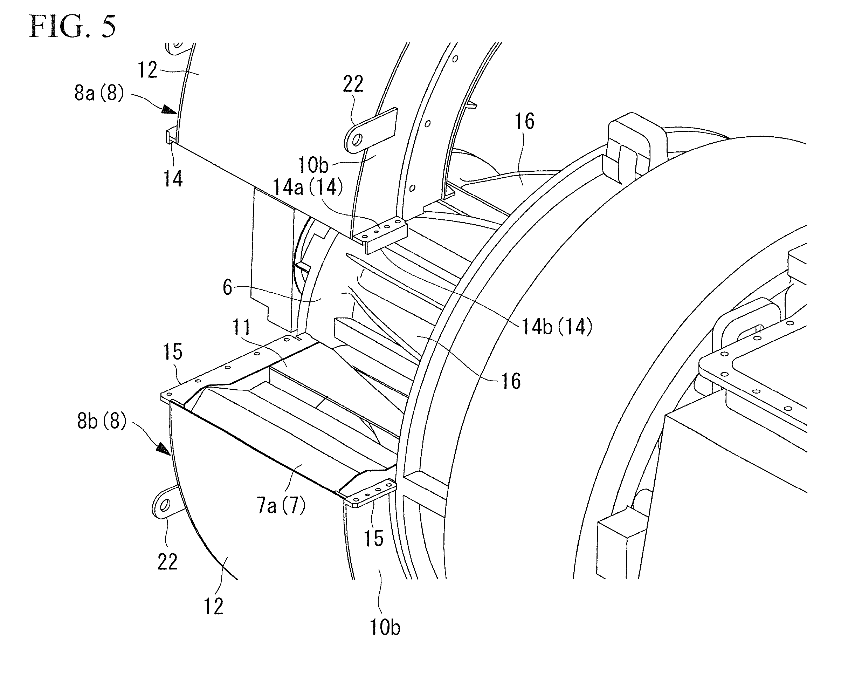

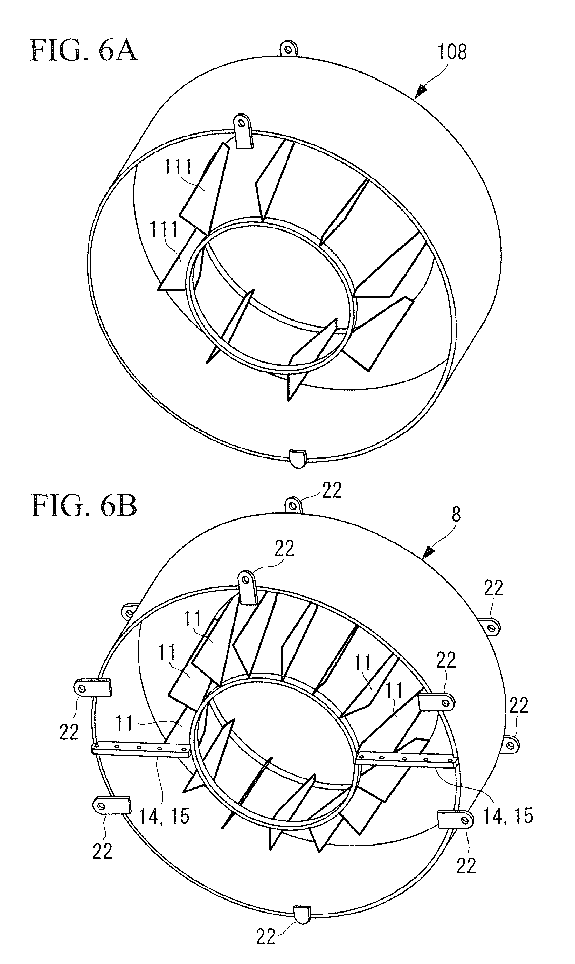

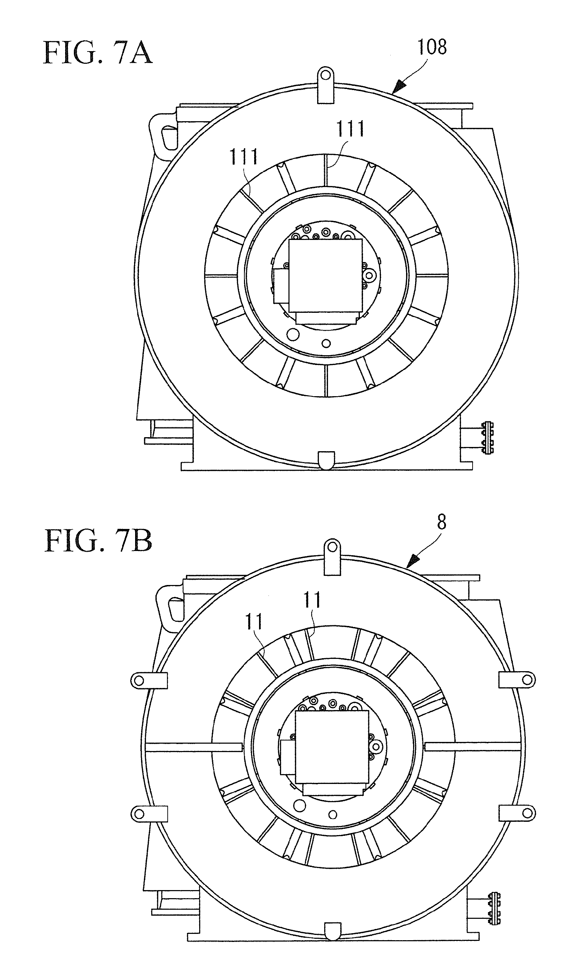

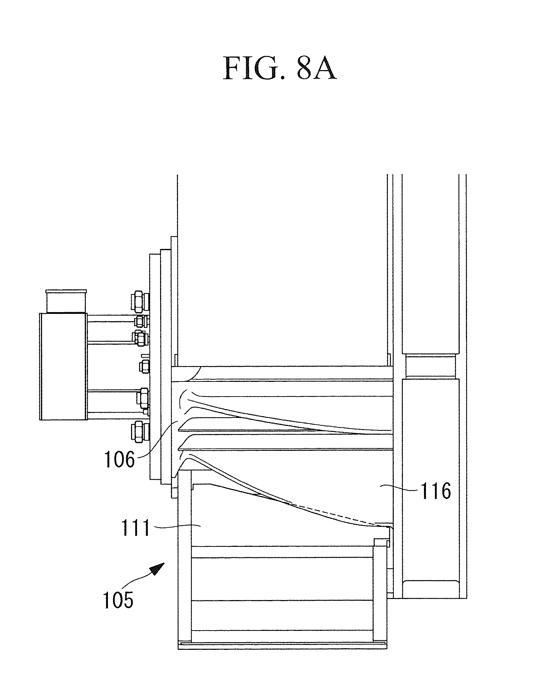

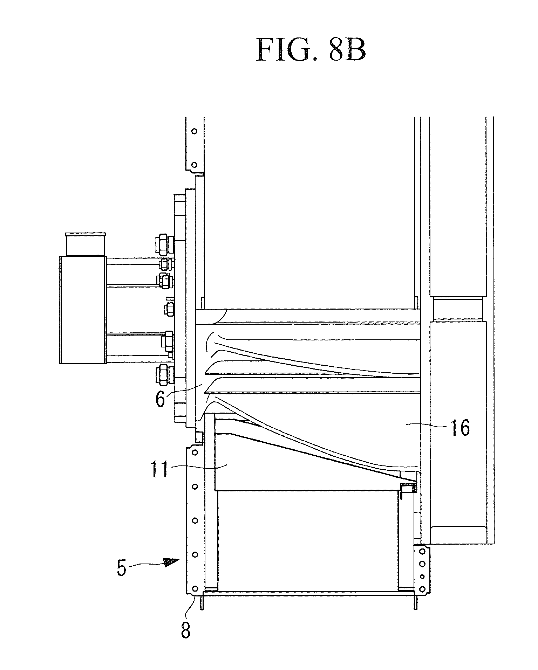

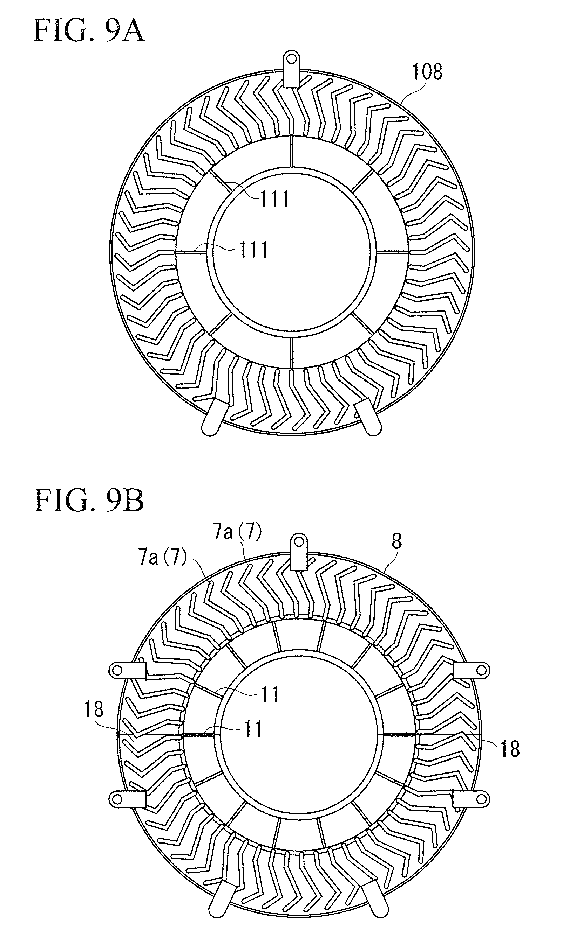

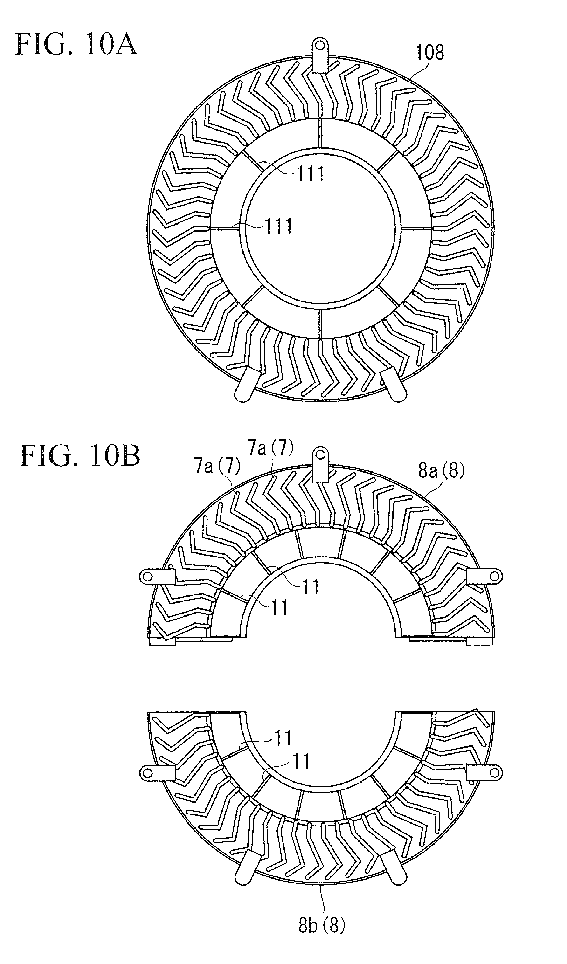

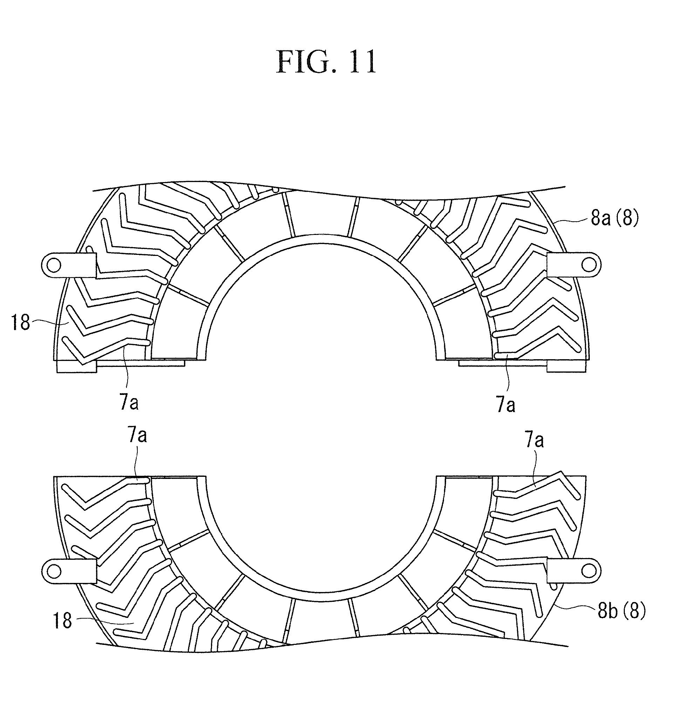

{Fig. 1} Fig. 1 is an overall perspective view of a hybrid turbocharger having a silencer according to an embodiment of the present invention.
{Fig. 2} Fig. 2 is an overall perspective view of a hybrid turbocharger having a silencer in the related art.
{Fig. 3} Fig. 3 is a perspective view illustrating a case where the silencer of the hybrid turbocharger shown in Fig. 1 is split.
{Fig. 4} Fig. 4 is a partially enlarged view illustrating the configuration of the silencer shown in Fig. 3, as viewed from the right side thereof.
{Fig. 5} Fig. 5 is a partially enlarged view illustrating the configuration of the silencer shown in Fig. 3, as viewed from the left side thereof.
{Fig. 6A} Fig. 6A illustrates a silencer casing in the structure according to the related art.
{Fig. 6B} Fig. 6B illustrates a silencer casing in the structure according to the embodiment.
{Fig. 7A} Fig. 7A is a left side view of the silencer in the structure according to the related art.
{Fig. 7B} Fig. 7B is a left side view of the silencer in the structure according to the embodiment.
{Fig. 8A} Fig. 8A is a plan view of the silencer in the structure according to the related art, in a split state.
{Fig. 8B} Fig. 8B is a plan view of the silencer in the structure according to the embodiment, in a split state.
{Fig. 9A} Fig. 9A is a vertical sectional view schematically illustrating the configuration of a silencer element of the silencer in the structure according to the related art.
{Fig. 9B} Fig. 9B is a vertical sectional view schematically illustrating the configuration of a silencer element of the silencer in the structure according to the embodiment.
{Fig. 10A} Fig. 10A illustrates the silencer element in the structure according to the related art shown in Fig. 9A.
{Fig. 10B} Fig. 10B illustrates the structure of the silencer element according to the embodiment shown in Fig. 9B when the silencer element is split.
{Fig. 11} Fig. 11 is a partially enlarged view of the silencer element shown in Fig. 9B.

### {Description of Embodiments}

A hybrid turbocharger provided with a silencer according to an embodiment will be described below with reference to the drawings while comparing it with a hybrid turbocharger provided with a silencer in the related art.

Fig. 1 is a perspective view of the hybrid turbocharger provided with the silencer according to the embodiment. Fig. 2 is a perspective view of the hybrid turbocharger provided with the silencer in the related art. Figs. 3 to 5 are a perspective view and partially enlarged views of the silencer according to this embodiment shown in Fig. 1. Figs. 6 to 10 illustrate the structure of the silencer, a silencer casing, and a silencer element, and each include a diagram A showing the structure in the related art and a diagram B showing the structure according to this embodiment. Fig. 11 is a partially enlarged view of the silencer element according to this embodiment.

As shown in Figs. 1 to 3, a hybrid turbocharger (turbocharger) 1 provided with a silencer (turbocharger silencer) 5 according to this embodiment is mainly constituted of a turbine 2 that is driven by exhaust gas introduced from a marine internal combustion engine (e.g., a diesel engine or a gas turbine engine) (not shown), a compressor 3 that is driven by the turbine 2 so as to pressure-feed air (outside air) to the aforementioned internal combustion engine, a turbocharger rotating shaft (not shown) that connects the turbine 2 and the compressor 3, and the silencer 5 having a motor-generator (at least one of a motor and a generator) therein.

The compressor 3 has a compressor impeller (not shown) that is rotationally driven so as to deliver air in a radially outward direction, and a centrifugal chamber (not shown) that surrounds the compressor impeller and in which the air delivered by the compressor impeller is compressed. The air passing through the centrifugal chamber travels through, for example, an intercooler (not shown) and a surge tank (not shown) so as to be supplied to the aforementioned internal combustion engine. The silencer 5 is disposed adjacent to an opposite side of the compressor 3 from the turbine 2.

The silencer 5 is substantially cylindrical and takes in air from the outer periphery thereof. The silencer 5 includes a silencer element (silencer body) 7 disposed around the motor-generator and a silencer casing 8 (silencer casing) accommodating the silencer element 7 therein, as shown in Fig. 3. The silencer element 7 and the silencer casing 8 each are splittable into two parts in a direction (i.e., vertical direction in each drawing) orthogonal to the axial direction of the turbocharger rotating shaft.

As shown in Fig. 3, the outer periphery of the motor-generator is surrounded by a motor-generator housing (housing) 6. The motor-generator contained within the motor-generator housing 6 has a motor-generator shaft (rotating shaft) that extends in the axial direction of the hybrid turbocharger 1 substantially through the center of the motor-generator housing 6. The motor-generator shaft (not shown) is disposed substantially coaxially with the turbocharger rotating shaft, which connects the compressor 3 and the turbine 2, with a flexible coupling (not shown) interposed therebetween, and rotates together with the turbocharger rotating shaft.

One end of the motor-generator shaft extends substantially through the center of the motor-generator housing 6 and the silencer casing 8 and protrudes leftward in the drawing. This end is provided with a junction box 9 that is connected to an output power cable (not shown). The side of the motor-generator housing 6 provided with the junction box 9 is provided with a pipe arrangement section 13 to which supply pipes (not shown) for supplying a lubricant, a coolant, and cooling air to the motor-generator are connected.

The motor-generator housing 6 is substantially cylindrical. As shown in Figs. 4 and 5, the outer periphery of the motor-generator housing 6 is provided with a plurality of motor-generator-housing ribs (housing ribs) 16 that have substantially the same length as the motor-generator housing 6 in the axial direction and that extend from the motor-generator housing 6 toward an intake port (sidewall) 12 of the silencer casing 8.

The silencer casing 8 has panels (end surfaces) 10a and 10b extending orthogonally at opposite axial ends thereof and silencer ribs (silencer ribs) 11 that are provided around the outer periphery of the motor-generator housing 6 and that connect the panels 10a and 10b, whereby the silencer casing 8 is formed into a substantially cylindrical shape. A sidewall, as viewed in a direction orthogonal to the axial direction of the silencer casing 8, serves as the intake port 12 through which air is taken in. Furthermore, as mentioned above, the silencer casing 8 is splittable into two parts, that is, an upper silencer casing 8a and a lower silencer casing 8b.

As shown in Figs. 4, 5, and 6, the panels 10a and 10b constituting the silencer casing 8 each form a ring shape when the upper silencer casing 8a and the lower silencer casing 8b are joined to each other and are splittable into two parts in the vertical direction along a horizontal line. The panels 10a and 10b are each provided with a plurality of lifting pieces 22 (e.g., three for each of the panels 10a and 10b of the upper silencer casing 8a and three for each of the panels 10a and 10b of the lower silencer casing 8b) along the outer periphery thereof. The lifting pieces 22 are to be used when lifting the silencer casings 8a and 8b.

Joint surfaces (splitting surfaces) of the upper silencer casing 8a and the lower silencer casing 8b are respectively provided with flanges 14 and 15 that extend outward in the horizontal direction (i.e., in the axial direction of the hybrid turbocharger 1) from the outer surfaces of the panels 10a and 10b. When the upper silencer casing 8a and the lower silencer casing 8b are to be joined to each other by using bolts and nuts (not shown), rubber sheets (vibration dampers) or the like are interposed between horizontal sections 14a (see Figs. 4 and 5), which constitute the flanges 14 of the upper silencer casing 8a, and the flanges 15 of the lower silencer casing 8b.

As shown in Figs. 4 and 5, the flanges 14 of the upper silencer casing 8a are constituted of horizontal sections 14a that extend outward in the horizontal direction from the outer surfaces of the panels 10a and 10b and vertical sections 14b that extend vertically downward from the edges of the horizontal sections 14a. In other words, each flange 14 is L-shaped in cross section. With each flange 14 being L-shaped in this manner, a path of air leaking between the joint surfaces of the upper silencer casing 8a and the lower silencer casing 8b is bent into an L-shape when the hybrid turbocharger 1 (see Fig. 1) is driven, whereby the sound of leaking air can be reduced.

The flanges 15 of the lower silencer casing 8b are each provided with a tapered-pin hole (not shown) to be fitted with a tapered pin (not shown) used for positioning the joint surfaces of the upper silencer casing 8a and the lower silencer casing 8b when the two casings are joined to each other.

As described above, the silencer ribs 11 constituting the silencer casing 8 surround the outer periphery of the motor-generator housing 6 and connect the panels 10a and 10b. Referring to Figs. 6 and 7, when silencer ribs 111 in the related-art structure (Figs. 6A and 7A) and the silencer ribs 11 according to this embodiment (Figs. 6B and 7B) are compared, the total number of silencer ribs 11 provided in the silencer casing 8 according to this embodiment is increased to, for example, 16, that is, eight silencer ribs 11 in the upper silencer casing 8a and eight silencer ribs 11 in the lower silencer casing 8b, in comparison with eight silencer ribs 111 provided in a silencer casing 108 in the related-art structure.

As shown in Figs. 4 and 5, the silencer ribs 11 provided at the joint surfaces of the upper silencer casing 8a and the lower silencer casing 8b according to this embodiment are flush with (i.e., substantially aligned with) the flanges 14 and the flanges 15 in the horizontal direction. Accordingly, these silencer ribs 11 are flush with the horizontal sections 14a of the flanges 14 and with the flanges 15, and the number of silencer ribs 11 provided in the upper silencer casing 8a and the lower silencer casing 8b is increased, whereby the rigidity of the upper silencer casing 8a and the lower silencer casing 8b can be maintained substantially at the same level as that of the silencer casing 108 (see Figs. 6A and 7A) in the related art.

Furthermore, as shown in the plan views in Fig. 8, in which a silencer 105 (Fig. 8A) in the related art and the silencer 5 (Fig. 8B) according to this embodiment are split along a horizontal line, the edges of the silencer ribs 111 extending toward a motor-generator housing 106 partially overlap the edges of motor-generator-housing ribs 116 (as denoted by dotted lines in Fig. 8A) in the related-art structure, whereas the silencer ribs 11 in the structure according to this embodiment have a length (shape), in a direction extending toward the motor-generator housing 6, such that the silencer ribs 11 do not overlap the edges of the motor-generator-housing ribs 16. Accordingly, the silencer ribs 11 according to this embodiment are made shorter in the direction extending toward the motor-generator housing 6, as compared with the silencer ribs 111 in the related art, whereby the silencer casing 8 can be split into two parts without the silencer ribs 11 and the motor-generator-housing ribs 16 interfering with each other.

Referring to Figs. 4 and 5, the silencer element 7 is provided around the outer periphery of the silencer ribs 11, is interposed between the panels 10a and 10b, and is substantially cylindrical. The silencer element 7 is splittable into two parts along a substantially horizontal line. The silencer element 7 is formed by arranging a plurality of substantially plate-like elements (sound absorbing members) 7a at substantially equal pitch circumferentially around the outer periphery of the motor-generator housing 6.

As shown in Figs. 9 to 11, each substantially plate-like element 7a is substantially V-shaped in cross section. The elements 7a are composed of, for example, glass wool. Fig. 11 is a partially enlarged view of the silencer element 7 constituted of the elements 7a when the silencer element 7 is split into two parts in the vertical direction. As shown in Fig. 11, when the silencer element 7 is split into two parts, the elements 7a are divided at positions corresponding to the joint surfaces of the upper silencer casing 8a and the lower silencer casing 8b. Specifically, as shown in Fig. 9B, the elements 7a are divided at outside-air flow paths 18 that are formed between the elements 7a located at the positions corresponding to the joint surfaces and through which air travels, and are arranged in the circumferential direction of the motor-generator housing 6 (see Figs. 3 and 4) such that each element 7a itself is not split in the vertical direction. By arranging the elements 7a as shown in Fig. 11, each element 7a itself is prevented from being split, so that the silencer element 7 can be split into two parts without impairing its silencing effect.

The silencer 5 according to this embodiment and the hybrid turbocharger 1 provided with the same exhibit the following advantages.

The silencer casing (silencer casing) 8 is splittable into two parts in the direction orthogonal to the axial direction of the motor-generator shaft (rotating shaft) of the motor-generator (at least one of a motor and a generator). Thus, the silencer (turbocharger silencer) 5 can be disassembled by removing the silencer casing (silencer casing) 8 without having to remove the supply pipes (not shown) from the pipe arrangement section 13 or the output power cable (not shown) from the junction box 9. This facilitates maintenance of the silencer 5, so that the number of personnel and the labor time required for maintenance can be reduced.

The flanges 14 and 15 are provided at the joint surfaces (splitting surfaces) of the upper silencer casing 8a and the lower silencer casing 8b, and the flanges 14 of the upper silencer casing (one of the split silencer casings) 8a are L-shaped. With the L-shaped flanges 14, a path of the sound of air leaking between the joint surfaces of the upper silencer casing 8a and the lower silencer casing 8b is bent into an L-shape, so that the sound of leaking air can be suppressed. Therefore, the sound of air leaking between the joint surfaces can be reduced as compared with a case where the flanges 14 of the upper silencer casing 8a are flat instead of being L-shaped.

Furthermore, with the L-shaped flanges 14 of the upper silencer casing 8a, the joint surfaces can be readily positioned when the upper silencer casing 8a and the lower silencer casing 8b are joined to each other. This allows for improved ease of assembly of the silencer 5.

The rubber sheets (vibration dampers) are interposed between the horizontal sections 14a of the flanges 14 and the flanges 15 (i.e., between the joint surfaces of the silencer casing 8). Thus, the sound of air leaking between the joint surfaces of the upper silencer casing 8a and the lower silencer casing 8b can be further reduced.

The silencer casing 8 is constituted of the intake port 12 that is provided in the sidewall, as viewed in the direction orthogonal to the axial direction thereof, and that takes in air (outside air); the panels (end surfaces) 10a and 10b provided at the axial ends of the silencer casing 8; and the plurality of (e.g., 16) silencer ribs (silencer ribs) 11 that are provided around the outer periphery of the motor-generator and connect the panels 10a and 10b. The panels 10a and 10b are provided with the flanges 14 and 15 that extend outward in the axial direction of the silencer casing 8. Accordingly, with the flanges 14 and 15 extending outward from the panels 10a and 10b of the silencer casing 8, air can be taken in through the intake port 12 without blocking the flow of air taken into the silencer casing 8.

The upper silencer casing 8a and the lower silencer casing 8b are each provided with eight (multiple) silencer ribs 11 so that the rigidity of the upper silencer casing 8a and the lower silencer casing 8b is increased. Thus, the rigidity of the upper silencer casing 8a and the lower silencer casing 8b can be maintained substantially at the same level as that of the non-splittable silencer casing 108 (see Fig. 6A).

The silencer ribs 11 each have a shape such that they do not come into contact with the motor-generator-housing ribs (housing ribs) 16 extending outward from the motor-generator housing (housing) 6 provided around the outer periphery of the motor-generator. Thus, the silencer ribs 11 and the motor-generator-housing ribs 16 do not interfere with each other. Consequently, the silencer casing 8 can be split and disassembled.

The elements 7a are arranged in the circumferential direction of the motor-generator housing 6 such that, when the silencer element (silencer body) 7 having the plurality of substantially plate-like elements (sound absorbing members) 7a arranged at substantially equal pitch circumferentially around the motor-generator shaft of the motor-generator is to be split, the silencer element 7 is split into two parts along the outside-air flow paths 18 formed between the elements 7a (i.e., any of the outside-air flow paths 18 formed between the elements 7a) located at positions corresponding to the joint surfaces of the upper silencer casing 8a and the lower silencer casing 8b. Consequently, each element 7a itself is prevented from being split, thus preventing a reduction in the sound absorbing effect.

The silencer 5 used allows for easier maintenance. Thus, maintenance of the motor-generator contained within the silencer 5 is facilitated. This allows for improved maintainability of the hybrid turbocharger 1.

Although the motor-generator is contained within the silencer 5 in this embodiment, the present invention is not limited to this; alternatively, a motor or a generator may be used.

### {Reference Signs List}

- 1: turbocharger (hybrid turbocharger)
- 5: turbocharger silencer (silencer)
- 6: housing (motor-generator housing)
- 7: silencer body (silencer element)
- 7a: sound absorbing member (element)
- 8: silencer casing (silencer casing)
- 10, 10a, 10b: end surface (panel)
- 11: silencer rib (silencer rib)
- 12: intake port
- 14, 15: flange
- 16: housing rib (motor-generator-housing rib)
- 18: outside-air flow path

## Claims

1. A turbocharger silencer comprising:
a silencer body disposed around at least one of a motor and a generator having a rotating shaft; and
a silencer casing that accommodates the silencer body therein,
wherein the silencer casing is splittable in a direction orthogonal to an axial direction of the rotating shaft.

2. The turbocharger silencer according to Claim 1,
wherein splitting surfaces of the split silencer casings are each provided with a flange, and
wherein the flange of one of the silencer casings is L-shaped in cross section.

3. The turbocharger silencer according to Claim 1 or 2,
wherein splitting surfaces of the split silencer casings have a vibration damper interposed therebetween.

4. The turbocharger silencer according to Claim 2 or 3,
wherein the silencer casing has an intake port that is provided in a sidewall, as viewed in a direction orthogonal to an axial direction of the silencer casing, and that takes in outside air; end surfaces provided at opposite ends of the silencer casing in the axial direction thereof; and a plurality of silencer ribs that are provided around an outer periphery of at least one of the motor and the generator and that connect the end surfaces, and
wherein the flanges extend outward in the axial direction from the end surfaces.

5. The turbocharger silencer according to Claim 4,
wherein the number of silencer ribs provided allows for increased rigidity of the split silencer casings.

6. The turbocharger silencer according to Claim 4 or 5,
wherein at least one of the motor and the generator includes a housing that surrounds an outer periphery thereof and a plurality of housing ribs extending toward the sidewall of the silencer casing from the housing, and
wherein the silencer ribs each have a shape such that the silencer ribs do not come into contact with the housing ribs.

7. The turbocharger silencer according to any one of Claims 1 to 6,
wherein the silencer body is formed of a plurality of substantially plate-like sound absorbing members,
wherein the sound absorbing members are arranged at substantially equal pitch circumferentially around the rotating shaft, and
wherein the sound absorbing members are arranged such that the silencer body is split along any of outside-air flow paths formed between the sound absorbing members.

8. A turbocharger comprising the turbocharger silencer according to any one of Claims 1 to 7.

9. A hybrid turbocharger comprising:
a motor-gener-ator that is coupled to a rotating shaft of a turbine and a compressor;
a motor-generator housing attached around the motor-generator;
a plurality of motor-generator-housing ribs extending radially from the motor-generator housing, each motor-generator-housing rib increasing in size toward an air intake port of the compressor so as to support the motor-generator and the motor-generator housing;
a plurality of silencer elements that are arranged around the motor-generator-housing ribs and that block sound flowing outside from the air intake port of the compressor;
a silencer casing provided around the silencer elements so as to cover the silencer elements;
panels that constitute a part of the silencer casing, the panels extending parallel to a plane orthogonal to the rotating shaft and sandwiching the silencer elements; and
silencer ribs that connect the panels and extend radially relative to the rotating shaft,
wherein the silencer casing is split into an upper silencer casing and a lower silencer casing along a horizontal line, and
wherein the motor-generator-housing ribs and the silencer ribs have adjusted shapes such that the motor-generator-housing ribs and the silencer ribs do not interfere with each other when the upper silencer casing is lifted in a vertical direction.
